Europäisches Patentamt

European Patent Office

Office européen des brevets

(19)

(11) Veröffentlichungsnummer : **0 194 433**
**B1**

# (12) EUROPÄISCHE PATENTSCHRIFT

(45) Veröffentlichungstag der Patentschrift :
20.09.89

(21) Anmeldenummer : 86101086.6

(22) Anmeldetag : 28.01.86

(51) Int. Cl.⁴ : **H 02 K 17/30**

(54) Umrichtergespeiste Drehfeldmaschine mit elektronischem Steller.

(30) Priorität : 11.02.85 DE 3504613

(43) Veröffentlichungstag der Anmeldung :
17.09.86 Patentblatt 86/38

(45) Bekanntmachung des Hinweises auf die Patenterteilung : 20.09.89 Patentblatt 89/38

(84) Benannte Vertragsstaaten :
DE FR GB IT NL SE

(56) Entgegenhaltungen :
DE—A— 3 204 864
DE—B— 2 715 366
DE—C— 894 588
PATENT ABSTRACTS OF JAPAN, Band 3, Nr. 71 (E-
118), 20. Juni 1979, Seite 93 E 118; & JP - A - 54 50908
(HITACHI SEISAKUSHO K.K.) 21.04.1979

(73) Patentinhaber : Siemens Aktiengesellschaft
Wittelsbacherplatz 2
D-8000 München 2 (DE)

(72) Erfinder : Plackner, Kurt, Dipl.-Ing. (FH)
Johann-Krieger-Strasse 17
D-8500 Nürnberg (DE)
Erfinder : Schamberger, Rudolf, Dipl.-Ing. (FH)
Am Entengraben 13
D-8500 Nürnberg (DE)
Erfinder : Kirchpfening, Max
deseased (DE)

EP 0 194 433 B1

## Beschreibung

Die Erfindung betrifft eine umrichtergespeiste Drehfeldmaschine mit elektronischem Steller.

Solche Maschinen haben bei symmetrischer Wellenlagerung des Läufers mit gleichgroßen Lagern in beiden Lagerschilden und entsprechend groß bemessener Läuferwelle mit weitgehend einheitlich großem Durchmesser den erforderlichen Steller außerhalb des Maschinengehäuses, so daß der gesamte Raumbedarf entsprechend groß ist. Bei Stößen ausgesetzten umrichtergespeisten Drehfeldmaschinen kann es erforderlich sein, Drehfeldmaschine und Steller auf schwingungsdämpfenden Unterlagen zu lagern. Zwischen der Drehfeldmaschine und einer angetriebenen, bzw. treibenden Maschine oder Organ kann bei größeren Einheiten oftmals eine elastische Kupplung vorgesehen sein, die zusätzlich schwingungsdämpfend wirkt. Die Drehfeldmaschine und insb. ihr Steller sind vielfach gegen unzulässige Energieabstrahlung abzuschirmen, was einen erheblichen zusätzlichen Aufwand an entsprechenden Mitteln erfordert, der einen entsprechenden zusätzlichen Raumbedarf bedingt.

Der Erfindung liegt die Aufgabe zugrunde, eine Drehfeldmaschine mit Steller zu schaffen, die einen geringeren Raumbedarf hat und deren Steller vor Erschütterungen besser geschützt und gegen unerwünschte Energieabstrahlungen nach außen einfacher abgeschirmt ist, wobei die Gesamtanordnung von Maschine und Steller kürzer baut als eine übliche Drehfeldmaschine allein und ein insgesamt geringerer Aufwand für die Maschinenlager ausreicht.

Die Lösung der gestellten Aufgabe gelingt durch die kennzeichnenden Merkmale des Anspruches 1.

Durch die Verbindung der Läufernabe mit der Welle am A-seitigen Lagerschild braucht nur dieser Wellenteil sowie das Lager für die Übertragung des Drehmomentes ausgelegt zu werden, wogegen der zum B-seitigen Ende hin erstreckte Wellenteil auf eine für ein wesentlich kleineres Biegemoment ausreichende Stärke reduzierbar ist und das B-seitige Lager im wesentlichen nur eine Stützfunktion hat, da das Biegemoment etwa in der Ebene der Läufermitte auf die Welle wirkt und die Abstände beider Lager zu dieser Ebene ungleich sind, derart das der B-seitige Lagerabstand größer als der A-seitige Lagerabstand bemessen ist. Die Verminderung der Wellenstärke zum B-seitigen Lager hin ergibt in radialer Richtung einen größeren Einbauraum für den Steller, der in axialer Richtung über die Läufernabe mitsamt dem Läufer bis nahe zum betreffenden Lagerschild reicht und in dem Endbereich außerhalb der Läufernabe in radialer Richtung der freie Raum innerhalb des Ständergehäuses im Bedarfsfall weitgehend für die Aufnahme des Stellers ausgenützt werden kann. Zwischen dem Ständergehäuse, der Läufernabe und der Welle sind ausreichende Zwischenräume für die Innenkühlung der geschlossenen Maschineneinheit vorhanden.

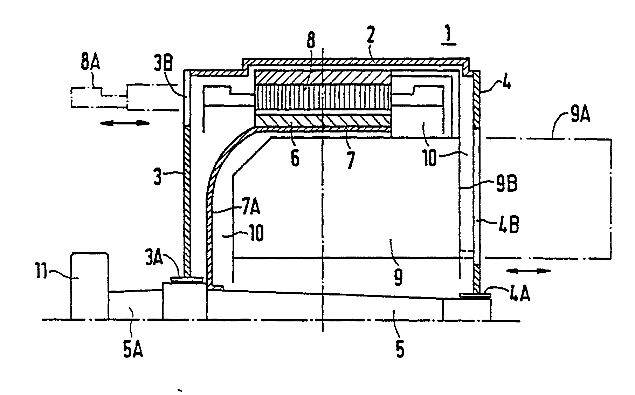

Ein Ausführungsbeispiel der Erfindung ist im teilweisen Längsschnitt schematisch in der Zeichnung dargestellt und nachfolgend erläutert:

Die Drehfeldmaschine samt Steller ist zu einer Baueinheit zusammengefaßt, wobei die Drehfeldmaschine 1 aus einem Ständergehäuse 2, einem A-seitigen Lagerschild 3, mit dem Hauptlager 3A, einem B-seitigen Lagerschild 4 mit dem kleineren Stützlager 4A und der Welle 5 für eine den Läufer 6 tragende, glockenförmige Läufernabe 7 sowie dem Ständer 8 besteht. Der elektronische Steller 9 ist innerhalb des Maschinengehäuses 2, 3 und 4 die Welle 5 ringförmig umgebend am Ständer 8 und gegebenenfalls gestrichelt angedeutet am B-seitigen Lagerschild 4 abgestützt in die Läufernabe 7 ragend angeordnet, so daß Zwischenräume 10 zwischen Ständergehäuse, Ständer, Läufernabe, Welle und dem B-seitigen Lagerschild für die inneren Kühlluftwege verbleiben.

Der Flansch 7A der Läufernabe 7 ist im Bereich des A-seitigen Lagers 3A mit der Welle 5 verbunden, wobei der Flansch, der betreffende Wellenteil sowie das A-seitige Lager für die Übertragung des vollen Drehmomentes ausgelegt sind. In einer in der Mitte des Läufers 6 verlaufenden strichpunktiert angedeuteten Ebene quer zur Längsachse der Maschine wirkt auf die Welle 5 nur ein wesentlich kleineres Biegemoment, so daß die Welle vom Lager 3A zum Stützlager 4A eine abnehmende Stärke erhalten kann, die das Gesamtgewicht des rotierenden Teiles herabgesetzt und den Aufnahmeraum für den Steller 9 vergrößert. Wegen der nur einseitigen Verbindung der Läufernabe 7A mit der Welle 5 kann außerdem die Wellenlänge zwischen den beiden Lagern kürzer bemessen sein und dennoch der notwendige Aufnahmeraum für den Steller ausreichend groß sein.

In nicht näher dargestellter Weise kann die Baueinheit schwingungsgedämpft gelagert sein und bei größeren Baueinheiten über eine elastische Kupplung 11 am A-seitigen Wellenende 5A mit einer nicht dargestellten angetriebenen bzw. antreibenden Einheit verbunden sein. Ferner können sowohl der Ständer als auch der Steller durch jeweils in den Lagerschilden 3 und 4 angebrachte verschließbare Durchlässe 3B und 4B von außen zugänglich sein für Wartungs-, Inspektions- und Reparatureingriffe. Hierzu ist es vorteilhaft, den Ständer samt Steller im Ständergehäuse verdrehbar zu lagern, damit ein Durchlaß in jedem Lagerschild den stirnseitigen Zugang zu allen Abschnitten von Ständer und Steller ermöglicht. Die Durchlässe sind dabei zweckmäßig an Scheitelstellen der Lagerschilde vorzusehen, wobei sie durch herausnehmbare Lagerschildteile gebildet sein können. Um nicht nur einen stirnseitigen Zugang zu ermöglichen, ist es besonders zweckmäßig, den Ständer und den Steller aus einzeln axial auswechselbaren Segmenten, nämlich Ständersegmenten 8A und Stellersegmenten 9A, zusammenzusetzen. Die Segmente können dabei aneinander formschlüssig oder in entsprechenden Gestellen oder Rahmen gehalten sein.

Durch die Unterbringung des Stellers innerhalb der Läufernabe im Ständergehäuse wird eine besonders wirksame Abschirmung der Energieabstrahlung, akustischer und elektrischer Art nach außen erreicht. Bei einer Zwischenschaltung von stoßdämpfenden Mitteln zwischen Ständer und Steller kann dieser auf einfache Weise stoßgesichert sein.

**Patentansprüche**

1. Umrichtergespeiste Drehfeldmaschine (1) mit elektronischem Steller (9), dadurch gekennzeichnet, daß im Ständergehäuse (2) der die Läuferwelle (5) ringförmig umgebende Steller (9) A-seitig in eine den Läufer (6) tragende glockenförmige Läufernabe (7) ragt und mit seinem außerhalb der Läufernabe (7) verbleibendem Ende (9B) am entsprechenden Ende des Ständers (8) und gegebenenfalls am B-seitigen Lagerschild (4) abgestützt ist und die Läufernabe dem A-seitigen Lagerschild (3) unmittelbar benachbart mit dem zur Drehmomentübertragung bemessenen Abschnitt der Läuferwelle verbunden ist, die etwa bis zur Mitte des Läufers auf eine für das Biegemoment ausreichende Stärke vermindert und im B-seitigen Lagerschild durch ein relativ kleines Stützlager (4A) gelagert ist.

2. Drehfeldmaschine nach Anspruch 1, dadurch gekennzeichnet, daß der Ständer (8) in einzeln lösbare Ständersegmente (8A) und der Steller (9) in einzeln lösbare Stellersegmente (9A) unterteilt ist.

3. Drehfeldmaschine nach Anspruch 1 oder 2, dadurch gekennzeichnet, daß der Ständer (8) samt Steller (9) drehbar im Ständergehäuse (2) angeordnet und in den Lagerschilden (3, 4) verschließbare Durchlässe (3B, 4B) für Wartungs-, Inspektions- und Reparatureingriffe vorgesehen sind.

4. Drehfeldmaschine nach Anspruch 2 und 3, dadurch gekennzeichnet, daß die einzelnen Ständer- bzw. Stellersegmente (8A, 9A) durch die betreffenden Durchlässe (3B, 4B) auswechselbar sind.

5. Drehfeldmaschine nach Anspruch 3 oder 4, dadurch gekennzeichnet, daß die verschließbaren Durchlässe (3B, 4B) durch herausnehmbare Lagerschildteile gebildet sind.

6. Drehfeldmaschine nach den vorhergehenden Ansprüchen, dadurch gekennzeichnet, daß das Ständergehäuse (2) schwingungsgedämpft gelagert und das A-seitige Wellenende (5A) mit einer elastischen Kupplung (11) verbunden ist.

**Claims**

1. Converter fed rotating field machine (1) comprising an electronic chopper (9), characterised in that in the stator housing (2), the chopper (9), which annularly encircles the rotor shaft (5), projects on the A side into a bell-shaped rotor hub (7) which carries the rotor (6), and is supported with its end (9B) which remains outside the rotor hub (7) at the corresponding end of the stator (8) and, if necessary, at the B side end housing (4), and the rotor hub is connected to the section of the rotor shaft which is dimensioned to the torque transmission, in such a way that it is directly adjacent to the A side end housing (3), and the rotor hub is reduced approximately as far as the middle of the rotor to give a diameter sufficient for the flexural torque, and is mounted in the B side end housing by means of a relatively small support step (4A).

2. Rotating field machine according to claim 1, characterised in that the stator (8) is subdivided into individually detachable stator segments (8A), and the chopper (9) is subdivided into individually detachable choper segments (9A).

3. Rotating field machine according to claim 1 or 2, characterised in that the stator (8) together with the chopper (9) are arranged in the stator housing (2) so that they can pivot, and lockable apertures (3B, 4B) are provided in the end housings (3, 4) for maintenance, inspection and repair access.

4. Rotating field machine according to claims 2 and 3, characterised in that the individual stator or chopper segments (8A, 9A) can be replaced through the respective apertures (3B, 4B).

5. Rotating field machine according to claim 3 or 4, characterised in that the lockable apertures (3B, 4B) are formed by removable end housing sections.

6. Rotating field machine according to the previous claims, characterised in that the stator housing (2) is installed in such a way that vibration is damped, and the A side shaft end (5A) is connected to a flexible coupling (11).

**Revendications**

1. Machine (1) à champ tournant alimentée par un convertisseur statique et équipée d'un régleur électronique (9), caractérisée en ce que le régleur (9), entourant en forme d'anneau l'arbre (5) du rotor, fait saillie, à l'intérieur de la carcasse (2) du stator, dans un moyeu de rotor (7) en forme de cloche, portant le rotor (6), et est appuyé par son extrémité (9B), située à l'extérieur du moyeu (7), sur l'extrémité correspondante du stator (8) et, éventuellement, sur le flasque (4) du côté B, et que le moyeu du rotor est relié directement à la partie de l'arbre du rotor conçue pour la transmission du couple, à proximité immédiate du flasque (3) du côté A, l'arbre du rotor étant réduit en épaisseur, à peu près jusqu'au milieu du rotor, jusqu'à une épaisseur suffisante pour pouvoir encaisser le moment fléchissant et l'arbre du rotor étant monté rotatif, dans le flasque du côté B, au moyen d'un palier d'appui (4A) relativement petit.

2. Machine selon la revendication 1, caractérisée en ce que le stator (8) est divisé en segments statoriques (8A) détachables individuellement et le régleur (9) est divisé en segments de régleur (9A) détachables individuellement.

3. Machine selon la revendication 1 ou 2, caractérisée en ce que le stator (8) et le régleur (9) sont conjointement disposés rotatifs dans la carcasse (2) du stator et que des passages obturables (3B, 4B) sont prévus dans des flasques (3, 4) à des fins d'entretien, d'inspection et de réparation.

4. Machine selon les revendications 2 et 3, caractérisée en ce que les différents segments statoriques et de régleur (8A, 9A) peuvent être remplacés à travers les passages (3B, 4B) correspondants.

5. Machine selon la revendication 3 ou 4, caractérisée en ce que les passages obturables (3B, 4B) sont constitués par des parties amovibles des flasques.

6. Machine selon les revendications précédentes, caractérisée en ce que la carcasse (2) du stator est montée sur un système d'amortissement des vibrations et que le bout d'arbre (5A) du côté A est relié à un accouplement élastique (11).